# EUROPÄISCHE PATENTANMELDUNG

(11) **EP 4 032 384 A2**
(43) Veröffentlichungstag der Anmeldung: **27.07.2022**
(21) Anmeldenummer: 22152575.1
(22) Anmeldetag: 20.01.2022
(51) Int. Cl.: A01C 9/00, A01C 7/06, A01C 23/00, A01C 1/08

(54) **LEGEVORRICHTUNG FÜR HACKFRÜCHTE SOWIE VERFAHREN ZUM BETREIBEN EINER SOLCHEN LEGEVORRICHTUNG**

(30) Priorität: 22.01.2021 DE 102021101392; 16.02.2021 DE 102021103636
(71) Anmelder: Grimme Landmaschinenfabrik GmbH & Co. KG, 49401 Damme (DE)
(72) Erfinder: Hohnhorst, Johannes, 49401 Damme (DE); Wulferding, Henrik, 27248 Ehrenburg (DE); Böging, Michael, 49424 Goldenstedt/Lutten (DE); Meyer, Janosch, 49080 Osnabrück (DE)
(74) Vertreter: Wischmeyer, André

(57) **Zusammenfassung**

Die Erfindung betrifft eine Legevorrichtung für Hackfrüchte, insbesondere von Kartoffeln, umfassend wenigstens einen Bunker (4) für Vermehrungsmaterial, welches eine Vielzahl vereinzelbarer Vermehrungsfrüchte (6) umfasst, zumindest eine Vereinzelungsvorrichtung (8) für die Einzelabgabe der in Reihen zu legenden Vermehrungsfrüchte (6) auf eine landwirtschaftliche Nutzfläche (10) und eine Applikationsvorrichtung mit wenigstens einer Düse (12) zur Ausbringung eines flüssigen Applikationsmittels, insbesondere eines Beizmittels, auf die Vermehrungsfrucht (6), wobei eine Steuervorrichtung (14) auf Basis zumindest eines Signals einer Signalgebervorrichtung der Legevorrichtung (2) zur automatischen Steuerung der zumindest einen Applikationsvorrichtung zur intervallartigen Abgabe des Applikationsmittels ausgebildet ist. Weiterhin betrifft die Erfindung ein Verfahren zum Betreiben einer Legevorrichtung für Hackfrüchte, insbesondere Kartoffeln.

## Beschreibung

Die vorliegende Erfindung betrifft eine Legevorrichtung für Hackfrüchte, insbesondere für Kartoffeln, umfassend wenigstens einen Bunker für Vermehrungsmaterial, welches eine Vielzahl vereinzelbarer Vermehrungsfrüchte umfasst, zumindest eine Vereinzelungsvorrichtung für die Einzelabgabe der in Reihe zu legenden Vermehrungsfrüchte auf eine landwirtschaftliche Nutzfläche und eine Applikationsvorrichtung mit wenigstens einer Düse zur Ausbringung eines flüssigen Applikationsmittels, insbesondere eines Beizmittels. Des Weiteren betrifft die Erfindung ein Verfahren zum Betreiben einer solchen Legevorrichtung für Hackfrüchte, wobei mittels der Vereinzelungsvorrichtung die Vermehrungsfrüchte nacheinander in Reihe auf einer landwirtschaftlichen Nutzfläche abgelegt werden und wobei die Vermehrungsfrüchte mit einem über eine Düse einer Applikationsvorrichtung der Legevorrichtung abgegebenen, flüssigen Applikationsmittel, insbesondere einem Beizmittel, benetzt werden.

Aus dem Stand der Technik bekannte Kartoffellegemaschinen geben während eines Legevorgangs kontinuierlich das Applikationsmittel ab. Dies ist vor dem Hintergrund strenger werdender Umweltschutzbestimmungen ungewünscht.

Darüber hinaus ist es aus dem Bereich von Saatkornablagevorrichtungen bekannt (DE 10 2018 117 493 A1), Flüssigkeiten in Abhängigkeit einer Vereinzelungsfrequenz auf die jeweilige landwirtschaftliche Nutzfläche zu applizieren. Auch hierbei werden große Mengen des Applikationsmittels nicht zielgerichtet eingesetzt, da der Auftreffbereich des Saatkorns für eine sichere Bodenwirkung tendenziell zu groß eingestellt werden muss.

Es ist Aufgabe der vorliegenden Erfindung, eine Legevorrichtung für Hackfrüchte zu schaffen, bei der möglichst wenig Applikationsmittel möglichst zielgerichtet abgegeben wird.

Die Aufgabe wird gelöst durch einen Gegenstand gemäß Anspruch 1 sowie durch ein Verfahren gemäß Anspruch 9. Vorteilhafte Ausgestaltungen der Erfindung sind den jeweils zugeordneten Unteransprüchen sowie der nachfolgenden Beschreibung zu entnehmen.

Erfindungsgemäß weist eine Legevorrichtung für Hackfrüchte eine Steuervorrichtung auf, die auf Basis zumindest eines Signals einer Signalgebervorrichtung der Legevorrichtung zur automatischen Steuerung der Applikationsvorrichtung zur zumindest intervallartigen und insbesondere intermittierenden Abgabe des Applikationsmittels ausgebildet ist. Die Applikationsvorrichtung wird von der Steuervorrichtung dergestalt gesteuert, dass das Applikationsmittel zumindest intervallartig und insbesondere intermittierend abgegeben wird und die Abgabe zwischen der Benetzung nacheinander folgender Vermehrungsfrüchte reduziert oder unterbrochen ist.

Auf Basis des insbesondere die Position, die Geschwindigkeit und/oder die Größe der Vermehrungsfrucht indizierenden Signals der Signalgebervorrichtung kann die Steuervorrichtung erfindungsgemäß die Applikationsvorrichtung dergestalt steuern, dass das Applikationsmittel zielgerichtet auf die Vermehrungsfrucht aufgebracht wird. Hierdurch wird erreicht, dass nur genau diejenige Menge ausgegeben wird, mit der sichergestellt wird, dass die von der Vereinzelungsvorrichtung vereinzelte Vermehrungsfrucht ausreichend benetzt wird. Ein überflüssiges Aufbringen des Applikationsmittels auf die landwirtschaftliche Nutzfläche wird zumindest reduziert oder sogar vermieden.

Die eingangs gestellte Aufgabe wird entsprechend durch ein Verfahren gelöst, bei dem eine Steuervorrichtung im Betrieb auf Basis zumindest eines Signals der Signalgebervorrichtung die Applikationsvorrichtung dergestalt automatisch steuert, dass diese das Applikationsmittel zumindest intervallartig und insbesondere intermittierend abgibt.

Insbesondere betrifft die Erfindung angehängte und insbesondere gezogene Legevorrichtungen, insbesondere gezogene Becher- oder Riemenlegemaschinen für Kartoffeln.

Eine zumindest intervallartige Abgabe des Applikationsmittels während des Betriebs der Legevorrichtung liegt auch dann vor, wenn nach der Benetzung einer Vermehrungsfrucht und vor der Benetzung einer nächsten Vermehrungsfrucht die Abgabe nicht komplett unterbunden sondern lediglich reduziert wird, um bereits hierüber die Abgabemenge des Applikationsmittels insgesamt zu reduzieren bzw. zu minimieren. Insbesondere wird eine Reduktion um zumindest 30%, vorzugsweise um zumindest 40% bereits als intervallartige Abgabe verstanden. Die Länge nacheinander folgender Intervalle sowohl der Abgabe als auch reduzierter Abgabe oder unterbrochener Abgabe kann unterschiedlich sein.

Bei einer zumindest intervallartigen Abgabe des Applikationsmittels handelt es sich somit um eine regelmäßige oder eine unregelmäßige Abgabe des Applikationsmittels, wobei diese Abgabe insbesondere in Abhängigkeit von dem tatsächlichen oder erwarteten Vorhandensein einer Vermehrungsfrucht im von der Düse im Betrieb ausgebildeten Sprühfeld erfolgt. Sie erfolgt insbesondere nur dann, wenn tatsächlich eine Vermehrungsfrucht, z.B. eine Kartoffelknolle Sprüh- bzw. Düsenfeld vorhanden ist.

Das flüssige Applikationsmittel ist insbesondere ein Beizmittel oder ein Flüssigdünger.

Die Steuervorrichtung kann Teil der Applikationsvorrichtung und damit dieser zugeordnet sein, alternativ oder ergänzend kann es sich auch um eine eigenständige, auf der Legevorrichtung angeordnete Steuervorrichtung handeln, die zur Steuerung derselben insgesamt ausgebildet ist.

Die Applikationsvorrichtung umfasst insbesondere ein oder mehrere Vorratsbehältnisse für das Applikationsmittel, die zumindest eine Düse zur Abgabe des flüssigen Applikationsmittels sowie ein oder mehrere mit der Düse in Fluidkommunikation stehende Leitungen, nachfolgend auch als Fluidkanäle bezeichnet, die die eine oder mehrere Düsen mit dem insbesondere als Tank ausgebildeten Vorratsbehältnis verbinden. Zur Förderung des Applikationsmittels vom Vorratsbehältnis zur Düse kann zumindest eine Pumpe vorgesehen sein. Diese dient auch zur Einstellung eines notwendigen Drucks für die Ausbildung eines Sprüh- bzw. Düsenfeldes des Applikationsmittels. Für die intermittierende Abgabe kann die Pumpe zielgerichtet angesteuert werden, um für den Abgabefall einen ausreichend großen Druck aufzubauen. Alternativ oder ergänzend weist die Applikationsvorrichtung zumindest ein Ventil auf, mit dem die Leitung zur Düse oder diese selbst freigegeben wird. Bei einer Mehrzahl von Düsen ist vorzugsweise jeder Düse ein Ventil zugeordnet, um diese separat oder auch gleichzeitig ansteuern zu können. Insbesondere steuert die Steuervorrichtung das zumindest eine Ventil, welches beispielsweise als Magnetventil ausgebildet ist.

Weiterhin kann die Applikationsvorrichtung Volumenstromsensoren, Drucksensoren oder Drehzahlsensoren aufweisen, mit denen die Applikationsvorrichtung und insbesondere der oder die Fluidkanäle überwacht werden, um eine möglichst hohe Prozesssicherheit für die Ausbringung des Applikationsmittels zu erreichen. Die Signale dieser Sensoren können von der Steuervorrichtung und/oder von der Applikationsvorrichtung dazu verwendet werden, einen gewünschten Druck und/oder Volumenstrom aufrecht zu erhalten und die Abgabemengen und/oder die Pumpe zu überwachen.

Vorzugsweise wird über die eine oder mehreren Pumpen der Applikationsvorrichtung der jeweiligen Leitung zur Düse ein Druck zwischen 1 und 10 bar aufgebaut, wobei die Steuervorrichtung dergestalt ausgelegt sein kann, dass mittels der Pumpe und/oder der Ventiltechnik unterschiedliche Drücke im System einstellbar sind. Durch die unterschiedlichen Drücke kann die zumindest intervallartige Abgabe mittels verschiedener Düsen und/oder verschiedener Applikationsmittel besser gesteuert werden. Mit einer solchen Vorrichtung können Applikationsmittel in Form von Flüssigkeiten mit Viskositäten von 1 bis 80 mPas erfindungsgemäß verwendet werden, so dass die Abgabemenge minimiert wird.

Auch wenn in der Steuervorrichtung vorgesehen werden kann, dass deren Steuerung der Applikationsvorrichtung von einer Bedienperson manuell übersteuert werden kann und somit gezielt ein Ein- oder Ausschalten einer kontinuierlichen bzw. dann ausgeschalteten Abgabe möglich ist, ist der Regelarbeitsfall der Steuer- und der Applikationsvorrichtung derjenige einer automatischen und zumindest intervallartigen Abgabe des Applikationsmittels, mit dem jeweilige Vermehrungsfrüchte, die von der Legevorrichtung abgegeben werden, gezielt und vermehrungsfruchtspezifisch benetzt werden.

Gemäß einem vorteilhaften Ausführungsbeispiel der Erfindung ist die Signalgebervorrichtung mit einem Antriebsorgan der Vereinzelungsvorrichtung gekoppelt. Alternativ oder ergänzend weist sie einen Sensor zur Erfassung eines weiteren Elements der Vereinzelungsvorrichtung und/oder einen Sensor zur Erfassung der Fördergeschwindigkeit der Vereinzelungsvorrichtung, insbesondere zur Erfassung der Fördergeschwindigkeit der von der Vereinzelungsvorrichtung vereinzelten und auszugebenden Vermehrungsfrüchte auf. Entsprechend kann die Ausgabe des Applikationsmittels in Abhängigkeit von der Fördergeschwindigkeit und/oder der Bewegung eines Elements der Vereinzelungsvorrichtung und/oder in Abhängigkeit eines von einem Antriebsorgan der Vereinzelungsvorrichtung ausgehenden Signals von der Steuervorrichtung gesteuert werden. Beispielsweise kann es sich bei einem Sensor zur Erfassung eines weiteren Elements der Vereinzelungsvorrichtung um einen Drehzahlsensor handeln, der die Rotation einer Antriebswelle der Vereinzelungsvorrichtung erfasst. Auch ist es denkbar, dass es sich um einen mechanischen Signalgeber handelt, der durch das Vorbeibewegen an einem Anschlag ein Signal erzeugt, welches beispielsweise eine Pumpe oder ein Ventil betätigt. Insbesondere handelt es sich bei dem Sensor um einen solchen, der ein Element der Vereinzelungsvorrichtung in Form eines Bechers einer Legevorrichtung erfasst.

Durch die Erfassung und/oder Abschätzung der Fördergeschwindigkeit der Vermehrungsfrüchte ist es möglich, Signalgeber bzw. Sensor und Düse räumlich zu trennen und erstere optimal zu platzieren. Hierdurch wird wiederum die Prozesssicherheit erhöht und die Abgabe besser minimierbar.

Entsprechend ist ein erfindungsgemäßes Verfahren vorteilhafterweise dahingehend weitergebildet, dass die Signalgebervorrichtung ein Signal eines Antriebsorgans der Vereinzelungsvorrichtung, eines weiteren Elements der Vereinzelungsvorrichtung und/oder ein Signal betreffend die Fördergeschwindigkeit erfasst. Die Fördergeschwindigkeit einzelner Vermehrungsfrüchte in der Vereinzelungsvorrichtung, die beispielsweise ausgehend von einem Antriebsrad einer Becherlegemaschine bestimmt werden kann, kann alternativ oder ergänzend auch von einer auf einem zugehörigen Schlepper vorhandenen Steuerung mitgeteilt werden, wenn diese hierzu Informationen vorliegen hat. Insbesondere wird die Intervalllänge für das Ein- und Ausschalten der Düse durch die Fördergeschwindigkeit, mit der jeweilige Vermehrungsfrüchte von der Vereinzelungsvorrichtung gefördert werden, bestimmt. Beispielsweise kann die Antriebsgeschwindigkeit eines Antriebsorgans einer Becher- oder Riemenlegemaschine von deren Vortriebsgeschwindigkeit abhängen, so dass mittels der Signalgebervorrichtung die Taktung der Applikationsvorrichtung von der Vortriebsgeschwindigkeit der Legemaschine abhängt.

Bei einer Mehrzahl von in Förderrichtung der Vermehrungsfrüchte hintereinander angeordneten Sensoren können ohne eine weitere Kopplung mit einem Antriebsorgan der Vereinzelungsvorrichtung Geschwindigkeiten und/oder Belegungen einzelner Förderelemente, wie Becher einer Legevorrichtung, sowie deren Geschwindigkeit erkannt werden und in der Steuervorrichtung zur Bestimmung der Ansteuerzeiten der Düse gut eingeschätzt werden. Die Auswertung in der Steuervorrichtung kann zusätzlich durch Signale eines Signalgebers des Antriebsorgans abgesichert werden.

Durch die Informationen der Fördergeschwindigkeit und/oder über die Belegung der einzelnen Förderelemente mit Vermehrungsfrüchten kann die Abgabe des Applikationsmittels genauer gesteuert werden, was den Bedarf an Applikationsmittel weiter optimiert.

Insbesondere umfasst die Signalgebervorrichtung zumindest einen Vermehrungsfruchtsensor, der zur insbesondere innerhalb und/oder unterhalb der Vereinzelungsvorrichtung durchführbaren Detektion einer Vermehrungsfrucht ausgebildet ist und dessen Signale von der Steuervorrichtung verarbeitbar sind. Als Vermehrungsfruchtsensoren kommen insbesondere Sensoren auf Ultraschall, Radar oder sichtbarem Licht oder Infrarotlicht in Frage. Es kann sich hierbei auch um eine kamerabasierte Sensorvorrichtung handeln, bei der mittels einer Bildauswertung auf das Vorhandensein von Vermehrungsfrüchten beispielsweise in einem Ausgabeschacht oder Förderbereich bzw. -kanal der Legevorrichtung geschlossen werden kann.

Mittels des oder der Vermehrungsfruchtsensoren kann das Auftreten der Vermehrungsfrucht in dem Bereich, in dem das Sprühfeld ausgebildet wird, bestimmt und somit eine Ortsvorhersage gemacht werden.

Mehrere Vermehrungsfruchtsensoren können nebeneinander oder hintereinander in Förderrichtung der Vermehrungsfrüchte angeordnet sein. Während die Anordnung zweier Sensoren in Förderrichtung betrachtet nebeneinander insbesondere für eine räumliche Erfassung des geförderten Vermehrungsmaterials vorteilhaft ist, kann aus hintereinander angeordneten Sensoren besonders gut die Geschwindigkeit der Legevorrichtung abgeschätzt werden. So ergibt sich beispielsweise aus der Dauer der Unterbrechung einer Lichtschranke ein Zusammenhang mit der benötigten Sprühdauer der Düse. Je größer die Unterbrechung ist, desto größer ist die ausgebrachte Vermehrungsfrucht und desto länger muss die Düse betrieben werden. Mittels einer Bildanalyse eines beispielsweise eine 2D- oder 3D-Kamera aufweisenden Vermehrungsfruchtsensors können diese Informationen bereits mit nur einem Sensor erhalten werden.

Um ein Auslaufen des Applikationsmittels möglichst weitgehend zu vermeiden und somit zu minimieren, ist ein im Fluidkanal zur Düse hin befindliches Ventil möglichst weit in Richtung der Düse, vorzugsweise unmittelbar vor dieser oder in dieser angeordnet. Dies hat gleichzeitig den Vorteil, dass Düse und Ventil als Baueinheit montiert und demontiert bzw. ausgetauscht werden können.

Während die Anordnung eines Vermehrungsfruchtsensors innerhalb der Vereinzelungsvorrichtung, insbesondere mit einem Sensorfeld, welches einen Transport- und Abgabebereich und/oder -kanal der Vermehrungsfrüchte erfasst, vorteilhaft ist für die geschützte Anordnung der Sensoren, ist die Ausrichtung des (Erfassungsfelds des) Sensors zwecks Erfassung eines insbesondere unterhalb der Legevorrichtung angeordneten Bereichs, durch den im Betrieb die Vermehrungsfrucht im freien Fall durchtritt, vorteilhaft für eine bessere Überprüfbarkeit der Steuervorrichtung und damit wieder für eine optimale Abgabe des Applikationsmittels. Die Vermehrungsfrüchte sind insbesondere im letzten unteren Bereich eines Ausgabe- bzw. Förderbereiches, insbesondere eines Ausgabe- bzw. Förderkanals sowie nach Austritt aus diesem zwischen Legevorrichtung und Nutzfläche im freien Fall befindlich. Der Vermehrungsfruchtsensor ist somit insbesondere seitlich einer im Betrieb durch den freien Fall der Vermehrungsfrucht entstehenden Flugbahn am unteren Ende der Vereinzelungsvorrichtung der Legevorrichtung oder unterhalb der Vereinzelungsvorrichtung angeordnet.

Bei einer Anordnung unterhalb einer Vereinzelungsvorrichtung können die Vermehrungsfrüchte insbesondere im freien Fall zwischen einer Abgabe aus einer Ausgabeöffnung eines Förderkanals und dem Aufprallen auf der Nutzfläche detektiert werden, wobei hierbei die Auswertung entsprechend schnell erfolgen muss, da dann die Vermehrungsfrucht nach der Erfassung noch mit einem Applikationsmittel benetzt werden muss.

Entsprechend ist die Ausrichtung der Düsen ebenfalls auf einen Bereich zwischen der Legevorrichtung und der landwirtschaftlichen Nutzfläche ausgerichtet, wobei das Sensorfeld zumindest teilweise oberhalb der von der Düse erzeugten Sprühfelder auszubilden ist. Es versteht sich, dass bei diesem Ausführungsbeispiel der Erfindung die Auswertung der Sensordaten in der Steuervorrichtung so vorzunehmen ist, dass diese für eine Ansteuerung der Düsen innerhalb weniger zehntel Sekunden notwendige Impulse an ein zugehöriges Ventil abgeben bzw. erzeugen kann.

Vorzugsweise ist daher für den Betriebsfall in den Fluidkanälen der Applikationsvorrichtung auch während einer unterbrochenen oder minimierten Ausgabe bereits ein ausreichend großer Betriebsdruck durch eine Pumpe und/oder die Ventiltechnik vorhanden. Dieser Betriebsdruck wird insbesondere auch während der Phasen, in denen die Abgabe reduziert bzw. gedrosselt ist, zumindest aufrechterhalten oder auf einen benötigten Wert angepasst, so dass im Abgabefall ausreichend Druck vorhanden ist. Pumpenlaufzeiten und Ventil- und/oder Düsenöffnungszeiten müssen somit nicht parallel zueinander sein, wodurch der Abgabebeginn des Applikationsmittels optimaler gestaltet wird.

Vorteilhafterweise ist die Steuervorrichtung insbesondere auf Basis der Informationen des Vermehrungsfruchtsensors zur Variation der Abgabemenge des Applikationsmittels eines einzelnen Sprühvorgangs ausgebildet. Insbesondere wird über den an der wenigstens einen Düse während der Applikationsmittelabgabe anliegenden Druck und/oder die Dauer des Intervalls der Applikationsmittelabgabe eine Variation der Abgabemenge herbeigeführt. Vorzugsweise ist somit insbesondere der Abgabedruck variierbar, insbesondere bei starkem Wind. Insbesondere wird bei Schlechtwetter in Form von Regen und/oder starkem Wind die Abgabemenge erhöht, um die Vermehrungsfrüchte ausreichend sicher zu benetzen, d.h. beispielsweise startet der einzelne Sprühvorgang etwas früher und endet etwas später, so dass eine möglichst vollständige Benetzung auch größerer Vermehrungsfrüchte gesichert ist.

Vorteilhafterweise weist die Applikationsvorrichtung zwei Düsen auf, die gleichzeitig oder separat durch die Steuervorrichtung automatisch intermittierend ansteuerbar ausgebildet sind. Je nach Positionierung der Düsen zueinander können diese mit ihren aufeinander zu ausgerichteten Düsenfeldern so montiert werden, dass die Vermehrungsfrüchte sicher vollumfänglich benetzt werden. Vorzugsweise handelt es sich hierbei um Düsen, die in einer Draufsicht betrachtet auf gegenüberliegenden Seiten einer Flugbahn liegen, die die Vermehrungsfrucht nach Abgabe aus einer Abgabeöffnung der Vereinzelungsvorrichtung bzw. einem zugehörigen Kanal in Richtung Nutzfläche einnimmt.

Die Steuervorrichtung kann hierbei je nach Höhe der Düsen relativ betrachtet zur Flugbahn so ausgelegt sein, dass sie die Düsen entweder gleichzeitig ansteuert oder auch separat nacheinander ansteuert, um bei unterschiedlichen Anordnungen der Düsen hinsichtlich der Höhe einen Zeitversatz zu berücksichtigen, so dass beide Düsen optimal die Vermehrungsfrucht auf der ihnen zugeordneten Seite benetzen und darüber hinaus möglichst wenig Applikationsmittel ungenutzt verbleibt.

Während dies sowohl für Düsen gilt, die beispielsweise innerhalb der Vereinzelungsvorrichtung in einem Abgabekanal angeordnet sind, ist die eine oder sind die mehreren Düsen auf eine im Betrieb entstehende Flugbahn der Vermehrungsfrucht ausgerichtet, so dass möglichst wenig Applikationsmittel innerhalb der Förderbereiche für die Vermehrungsfrüchte verbleibt.

Besonders vorteilhaft ist eine Ausgestaltung der Erfindung, bei der die wenigstens eine Düse, insbesondere alle Düsen, mit ihren Sprühfeldern von der Legevorrichtung weg und/oder an dieser vorbei ausgerichtet sind, wobei zur Vermeidung von Applikationsmitteln, welches seitlich an einer Vermehrungsfrucht vorbeiweht, die Düsen mit ihren Sprühfeldern hauptsächlich in oder gegen die vorgesehene Fahrtrichtung der Legevorrichtung, d.h. in Furchenrichtung ausgerichtet sind. Vorzugsweise sind die eine oder mehreren Düsen unter der Vereinzelungsvorrichtung beidseitig einer im Betrieb vorhanden Flugbahn der Vermehrungsfrucht angeordnet. Alternativ oder ergänzend kann eine Düse auch im Furchenzieher angeordnet sein.

Als Düse kann insbesondere eine Flachstrahldüse oder eine Hohlkegeldüse eingesetzt werden, die von einer Ringleitung oder einer Stichleitung versorgt werden. Diese Düsen können auch miteinander kombiniert werden.

Vorzugsweise ist die Steuervorrichtung weiterhin zur Umschaltung der Applikationsvorrichtung hin zu einem Dauerbetrieb ausgebildet, was beispielsweise für Betriebszustände, in denen aufgrund der Sensorsignale keine eindeutige Taktung bzw. zumindest intervallartige Ansteuerung durch die Steuervorrichtung möglich ist, vorteilhaft ist. So kann eine solche Dauerabgabe immer dann von der Steuervorrichtung ausgelöst werden, wenn beispielsweise ein Sensor ausfällt und eine Lichtschranke entsprechend ein Dauersignal abgibt, welches einem Unterbrechen der Lichtschranke entspricht. Hierdurch wird vermieden, dass Vermehrungsfrüchte unbenetzt gelegt werden.

Ein erfindungsgemäßes Verfahren ist insbesondere dann verbessert, wenn die Legevorrichtung einen Vermehrungsfruchtsensor aufweist, der insbesondere innerhalb der Vereinzelungsvorrichtung und/oder unterhalb dieser eine Vermehrungsfrucht insbesondere im freien Fall detektiert und dessen Signale von der Steuervorrichtung verarbeitet werden. Die Signale des Vermehrungsfruchtsensors sind dann von äußeren Umwelteinflüssen weitgehend unbeeinträchtigt. Insofern kann bei einer Anordnung innerhalb der Vereinzelungsvorrichtung besonders präzise unter während des Betriebs vergleichsweise kontrollierten Umständen das Vorhandensein einer Vermehrungsfrucht bestimmt werden. Gleiches gilt in Abhängigkeit des Sensors oder der Verwendung mehrerer interner Sensoren auch für die Erkennung der Fördergeschwindigkeit. So kann der Zeitpunkt der Abgabe des Applikationsmittels besonders genau bestimmt werden und somit das Sprühfeld optimal für eine passende Menge von Applikationsmittel erzeugt werden.

Eine Erfassung der Vermehrungsfrucht im freien Fall insbesondere unterhalb der Vereinzelungsvorrichtung bzw. an deren unteren Ende und eine hiermit einhergehende Benetzung in einem dieser Bereiche verbessert die Überprüfbarkeit der Steuerung der Applikationsvorrichtung durch die Steuervorrichtung verhindert hierdurch Fehlabgaben von Applikationsmittel.

Vorzugsweise wird für die Steuerung der Applikationsvorrichtung in der Steuervorrichtung, d.h. insbesondere für die Menge der Abgabe des Applikationsmittels, die Größe der Vermehrungsfrucht berücksichtigt.

Vorzugsweise wird in der Steuervorrichtung für die Steuerung der Applikationsvorrichtung ein insbesondere einstellbarer bzw. variierender Offset verwendet, mit dem eine Zeitdifferenz zwischen Detektion und Abgabe bzw. Erreichen des Bereichs, in dem das Sprüh- bzw. Düsenfeld ausgebildet wird, beschrieben wird. Dieser Offset berücksichtigt insbesondere noch eine Dauer für die Berechnung des Steuersignals sowie die für die Umsetzung des Steuersignals eine Zeitspanne, die zwischen Ansteuerung eines Ventils und dem Ausbilden des Düsenfelds bzw. Sprühfelds einhergeht.

Gemäß einer Weiterbildung des erfindungsgemäßen Verfahrens kann die Steuervorrichtung zur Auswahl unterschiedlicher Betriebsmodi ausgebildet sein, die von einer Bedienperson auswählbar sind und über die die Abgabemenge des Applikationsmittels und/oder die Abgabedauer für einen einzelnen Sprühvorgang vorgegeben werden. So kann beispielsweise in Abhängigkeit von Umgebungsbedingungen eine möglichst vollständige Benetzung der Vermehrungsfrucht vorgenommen werden, oder die Vor- und Nachlaufzeiten der Düse können möglichst kurz gehalten werden, mit der Konsequenz, dass möglicherweise die Benetzung der Vermehrungsfrucht nicht vollständig erfolgt.

Vorteilhafterweise werden mittels der Steuervorrichtung insbesondere auf Basis der Informationen eines Vermehrungsfruchtsensors die Abgabemenge des Applikationsmittels und/oder die Abgabedauer für einen einzelnen Sprühvorgang variiert. Der Sensor detektiert eine Vermehrungsfrucht und ggf. deren Größe, so dass ggf. basierend auf weiteren Umfeldinformationen wie Wind, Luft- und/oder Bodenfeuchte und/oder Regenmenge die Abgabemenge über die Öffnungsdauer und/oder den Applikationsmitteldruck und/oder die Öffnungsweite der Düse angepasst wird.

Weiterhin kann die Steuervorrichtung dergestalt ausgebildet sein, dass diese die Applikationsvorrichtung bei Vorliegen bestimmter äußerer Parameter, insbesondere bei Ausfall eines oder mehrerer Sensoren, zu einer kontinuierlichen Abgabe des Applikationsmittels umschaltet. Die bestimmten äußeren Parameter können beispielsweise nicht oder außerhalb von vorgegebenen Toleranzen arbeitende Sensoren oder extreme Wetterverhältnisse wie beispielsweise starker Regen oder extreme Trockenheit handeln.

Weitere Vorteile der einzelnen Erfindungen sind der nachfolgenden Figurenbeschreibung zu entnehmen. Schematisch dargestellt zeigt:
- Fig. 1: eine erfindungsgemäße Legevorrichtung in einer Seitenansicht,
- Fig. 2: eine schematische Darstellung eines Teils der erfindungsgemäßen Vorrichtung nach Fig. 1,
- Fig. 3: eine exemplarische Darstellung einer Signalverarbeitung einer erfindungsgemäßen Legevorrichtung.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

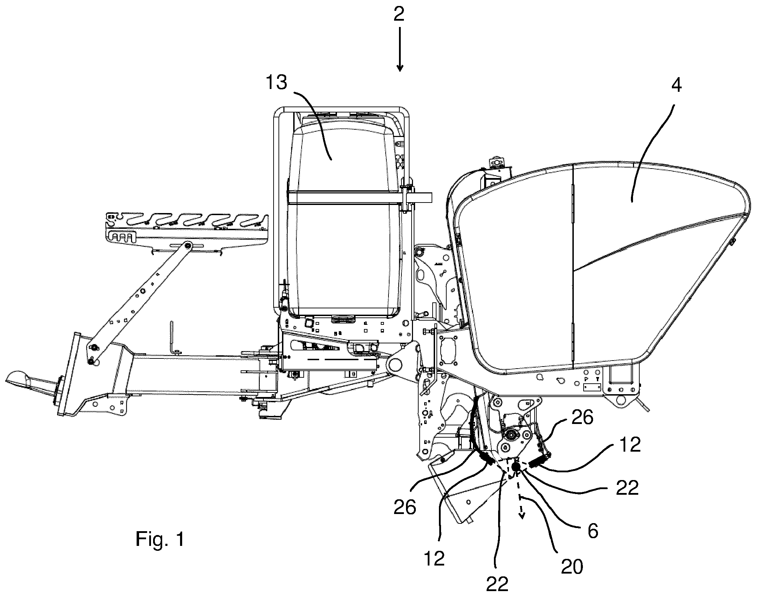

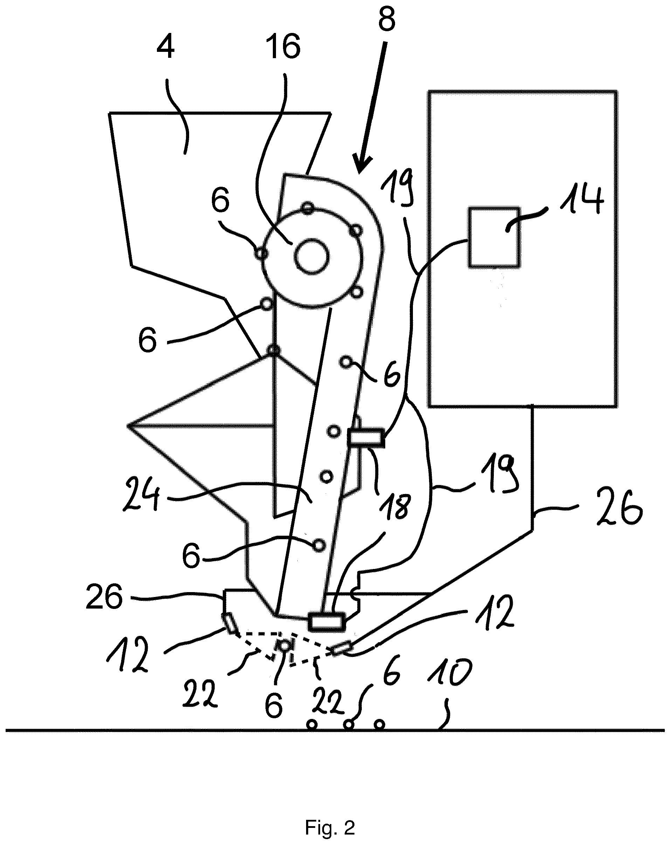

Eine erfindungsgemäße Legevorrichtung 2 für Hackfrüchte ist vorliegend als Kartoffellegevorrichtung, und zwar als Becherlegemaschine, ausgebildet. Es versteht sich, dass die Erfindung ebenfalls bei Riemenlegemaschinen eingesetzt werden kann. Sie weist wenigstens einen Bunker 4 für eine Vielzahl vereinzelbarer Vermehrungsfrüchte 6 in Form von Kartoffelknollen auf sowie eine Vereinzelungsvorrichtung 8 für die Einzelabgabe der in Reihen zu legenden Vermehrungsfrüchte 6 auf eine landwirtschaftliche Nutzfläche 10 (Fig. 1 und 2). Des Weiteren weist die Legevorrichtung 2 eine Applikationsvorrichtung mit vorliegend zwei Düsen 12 zur Ausbringung des in einem Tank 13 bevorrateten Applikationsmittels, vorliegend eines Beizmittels, auf. Dieses wird mittels der Düsen 12 auf die Vermehrungsfrüchte 6 gesprüht.

Eine Steuervorrichtung 14 umfassend eine EDV-Einheit, die mit üblichen Kommunikationsschnittstellen zur Ansteuerung und Kommunikation mit weiteren funktionalen Teilen der Legevorrichtung 2, insbesondere zur Ansteuerung der nicht näher dargestellten Pumpen und Ventile der Legevorrichtung 2 ausgebildet ist, ist auf Basis zumindest eines Signals einer Signalgebervorrichtung, die vorliegend zwei Vermehrungsfruchtsensoren 18 aufweist, zur automatischen Steuerung der Applikationsvorrichtung zwecks einer intermittierenden Abgabe des Beizmittels ausgebildet. Die Sensoren sind über Datenleitungen 19 mit der Steuervorrichtung 14 verbunden.

Insbesondere ist die Steuervorrichtung 14 in der Lage, die von den Vermehrungsfruchtsensoren 18 erhaltenen Daten so schnell zu interpretieren, dass die direkt unterhalb des Vermehrungsfruchtsensors 18 angeordneten Düsen Sprühfelder 22 zum Benetzen der Kartoffeln rechtzeitig aufbauen können. Die Signalgebervorrichtung umfasst allgemein die Sensoren 18 sowie deren Datenleitungen 19 hin zur Steuervorrichtung.

Vorliegend erhält die Steuervorrichtung 14 über die Signalgebervorrichtung aufgrund deren Kopplung mit einem Antriebsorgan 16 der Vereinzelungsvorrichtung der Becherlegemaschine eine zusätzliche Information über die Geschwindigkeit, mit der die Kartoffelknollen durch einen Ausgabekanal in Richtung einer Ausgabeöffnung gefördert werden. Mit Abgabe der Kartoffelknolle aus einem Förderkanal 24 der Vereinzelungsvorrichtung, der bekannten Geschwindigkeit sowie Ausrichtung der Kartoffelknollen ergibt sich eine Flugbahn 20 in Richtung der Nutzfläche 10, die von den beiden Düsen 12 zu beiden Seiten (Fig. 1 und 2) begrenzt wird. Die jeweiligen Sprühfelder 22 bilden sich dann so rechtzeitig, dass die Kartoffelknolle vollflächig benetzt wird. Sollte beispielsweise aufgrund einer zu starken Rotation der Kartoffelknolle die Verweildauer in den beiden Sprühfeldern 22 nicht ausreichend sein, um die Kartoffelknolle vollumfänglich zu benetzen, so kann beispielsweise die Fördergeschwindigkeit reduziert werden bzw. das Sprühfeld 22 länger ausgebildet werden, je nach verwendeter Düse das Sprühfeld 22 anders aufgefächert und/oder der Druck in der Applikationsvorrichtung erhöht werden.

Die von der Steuervorrichtung 14 gesteuerte Abgabe des Beizmittels über die Düsen 12 kann sich jeweils aufgrund von aktuellen Messwerten ergeben. Diese Abgabe kann bei einer weiteren Variante der Erfindung nach Feststellung eines regelmäßigen Abgabetaktes der Kartoffelknollen und Bestimmung eines entsprechenden Sprührhythmus in der Steuervorrichtung 14 automatisiert ohne weitere Sensorverwendung vorgegeben werden.

Das Applikationsmittel, insbesondere das Beizmittel, wird über Fluidkanäle ausbildende Fluidleitungen 26 vom als Tank 13 ausgebildeten Vorratsbehältnis zu den Düsen transportiert, wobei die Ausgabe durch Öffnen eines Ventils und/oder Druckaufbau mittels einer nicht näher dargestellten Pumpe bewirkt wird. Vorzugsweise ist ein zu betätigendes Ventil in der Nähe der Düsen den jeweiligen Fluidkanal 26 unterbrechend angeordnet, während die Pumpe für das Applikationsmittel in der Nähe des Tanks 13 angeordnet ist.

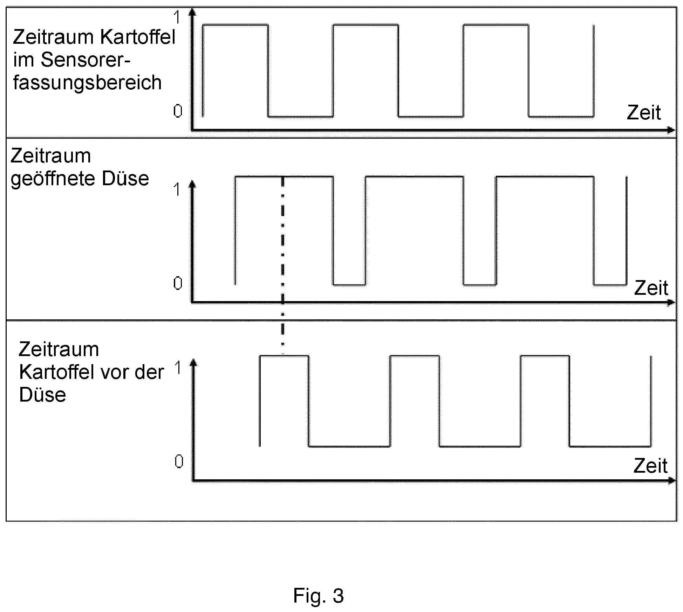

Eine exemplarische Signalverarbeitung für eine erfindungsgemäße Vorrichtung zeigt in Fig. 3 bezüglich y-Achse zwischen "0" und "1" wechselnde Zustände. Auf den x-Achsen ist jeweils die Zeit aufgetragen. Für den oberen Signalverlauf bedeutet "1", dass sich die Kartoffel im Sensorerfassungsbereich befindet, "0" bedeutet entsprechend, dass die Kartoffel nicht im Erfassungsbereich vorhanden ist. Der mittlere Signalverlauf charakterisiert mit "1" eine Offenstellung einer Düse und entsprechend eine Ausgabe eines Applikationsmittels, während "0" keine Abgabe bedeutet. Im unteren Signalverlauf ist der Zeitraum der Kartoffel vor der Düse, d.h. im Sprühfeld mit "1" dargestellt, während der Zeitraum außerhalb des Sprühfeldes mit "0" belegt ist.

Durch die Größe einer Vermehrungsfrucht 6 in Form einer Kartoffelknolle wird diese beispielsweise bei auf Laserbasis arbeitenden Vermehrungsfruchtsensoren über einen gewissen Zeitraum detektiert, was in der Fig. 3 im oberen Diagramm der Figur dargestellt ist. Bereits während die Kartoffelknolle noch im Sensorerfassungsbereich ist, werden gemäß dem mittleren Diagramm nach Fig. 3 die Düsen geöffnet. Der hierfür in der Steuervorrichtung hinterlegte Versatz berücksichtigt die Geschwindigkeit, mit der sich die Kartoffelknolle bewegt. Die Kartoffelknolle ist bereits im Sprühfeld 22 (unteres Diagramm), während sie aufgrund Ihrer Ausdehnung noch im Sensorerfassungsbereich erkannt wird. Nachdem die Kartoffelknolle auf ihrer Flugbahn 20 in Richtung Nutzfläche 10 den Sprühkegel wieder verlassen hat, ist die Düse noch etwas geöffnet, um eine vollständige Benetzung der Kartoffelknolle sicherzustellen. Anschließend wird die Abgabe des Beizmittels gestoppt, erkennbar durch die Werte 0 im mittleren Diagramm. Vorliegend können mindestens 30 % der Beizmittelmenge, die für einen Kartoffellegevorgang im Stand der Technik verwendet wird, auf diese Art und Weise eingespart werden, in einzelnen Betriebszuständen sogar mehr.

## Patentansprüche

1. Legevorrichtung für Hackfrüchte, insbesondere von Kartoffeln, umfassend wenigstens einen Bunker (4) für Vermehrungsmaterial, welches eine Vielzahl vereinzelbarer Vermehrungsfrüchte (6) umfasst, zumindest eine Vereinzelungsvorrichtung (8) für die Einzelabgabe der in Reihen zu legenden Vermehrungsfrüchte (6) auf eine landwirtschaftliche Nutzfläche (10) und eine Applikationsvorrichtung mit wenigstens einer Düse (12) zur Ausbringung eines flüssigen Applikationsmittels, insbesondere eines Beizmittels, auf die Vermehrungsfrucht (6), **dadurch gekennzeichnet, dass** eine Steuervorrichtung (14) auf Basis zumindest eines Signals einer Signalgebervorrichtung der Legevorrichtung (2) zur automatischen Steuerung der zumindest einen Applikationsvorrichtung zur intervallartigen Abgabe des Applikationsmittels ausgebildet ist.

2. Legevorrichtung nach Anspruch 1, **dadurch gekennzeichnet, dass** die Signalgebervorrichtung mit einem Antriebsorgan (16) der Vereinzelungsvorrichtung gekoppelt ist, einen Sensor zur Erfassung eines weiteren Elements der Vereinzelungsvorrichtung und/oder einen Sensor zur Erfassung der Fördergeschwindigkeit aufweist.

3. Legevorrichtung nach Anspruch 1 oder 2, **dadurch gekennzeichnet, dass** die Signalgebervorrichtung zumindest einen Vermehrungsfruchtsensor (18) umfasst, der zur insbesondere innerhalb der Vereinzelungsvorrichtung durchführbaren Detektion einer Vermehrungsfrucht (6) ausgebildet ist und dessen Signale von der Steuervorrichtung (14) verarbeitbar sind.

4. Legevorrichtung nach Anspruch 3, **dadurch gekennzeichnet, dass** die Steuervorrichtung (14) insbesondere auf Basis der Informationen des Vermehrungsfruchtsensors (18) zur Variation der Abgabemenge des Applikationsmittels eines einzelnen Sprühvorgangs ausgebildet ist.

5. Legevorrichtung nach einem der vorherigen Ansprüche, **dadurch gekennzeichnet, dass** der Vermehrungsfruchtsensor (18) auf einen insbesondere unterhalb der Legevorrichtung angeordneten Bereich ausgerichtet ist, durch den im Betrieb die Vermehrungsfrucht (6) im freien Fall durchtritt.

6. Legevorrichtung nach einem der vorherigen Ansprüche, **dadurch gekennzeichnet, dass** die Applikationsvorrichtung zwei Düsen (12) aufweist, die gleichzeitig oder separat durch die Steuervorrichtung (14) automatisch zumindest intervallartig und insbesondere intermittierend ansteuerbar ausgebildet sind.

7. Legevorrichtung nach einem der vorherigen Ansprüche, **dadurch gekennzeichnet, dass** die Düse auf eine im Betrieb entstehende Flugbahn (20) der Vermehrungsfrucht (6) ausgerichtet ist.

8. Legevorrichtung nach einem der vorherigen Ansprüche, **dadurch gekennzeichnet, dass** die wenigstens eine Düse (12) mit Ihrem Sprühfeld (22) von der Legevorrichtung (2) weg und/oder an dieser vorbei ausgerichtet ist.

9. Verfahren zum Betreiben einer Legevorrichtung für Hackfrüchte, insbesondere Kartoffeln, umfassend wenigstens einen Bunker (4) für Vermehrungsmaterial, welches eine Vielzahl vereinzelbarer Vermehrungsfrüchte (6) umfasst, wobei mittels zumindest einer Vereinzelungsvorrichtung (8) die Vermehrungsfrüchte (6) nacheinander in Reihen auf eine landwirtschaftliche Nutzfläche (10) abgelegt werden, und wobei die Vermehrungsfrüchte mit einem über eine Düse (12) einer Applikationsvorrichtung abgegebenen, flüssigen Applikationsmittel, insbesondere einem Beizmittel, benetzt werden, **dadurch gekennzeichnet, dass** eine Steuervorrichtung (14) im Betrieb auf Basis zumindest eines Signals der Signalgebervorrichtung die Applikationsvorrichtung dergestalt automatisch steuert, dass diese das Applikationsmittel zumindest intervallartig und insbesondere intermittierend abgibt.

10. Verfahren nach Anspruch 9, **dadurch gekennzeichnet, dass** die Signalgebervorrichtung ein Signal eines Antriebsorgans (16) der Vereinzelungsvorrichtung (8), eines weiteren Elements der Vereinzelungsvorrichtung (8) und/oder ein Signal betreffend die Fördergeschwindigkeit erfasst.

11. Verfahren nach Anspruch 9 oder 10, **dadurch gekennzeichnet, dass** die Signalgebervorrichtung zumindest einen Vermehrungsfruchtsensor (18) umfasst, der insbesondere innerhalb der Vereinzelungsvorrichtung (8) und/oder unterhalb dieser eine Vermehrungsfrucht (6) insbesondere im freien Fall detektiert und dessen Signale von der Steuervorrichtung (14) verarbeitet werden.

12. Verfahren nach Anspruch 11, **dadurch gekennzeichnet, dass** für die Steuerung der Applikationsvorrichtung in der Steuervorrichtung (14) die Größe der Vermehrungsfrucht (6) berücksichtigt wird.

13. Verfahren nach einem der Ansprüche 9 bis 12, **dadurch gekennzeichnet, dass** in der Steuervorrichtung (14) für die Steuerung der Applikationsvorrichtung ein insbesondere einstellbarer Offset verwendet wird.

14. Verfahren nach einem der vorherigen Ansprüche 9 bis 13, **dadurch gekennzeichnet, dass** mittels der Steuervorrichtung (14) insbesondere auf Basis der Informationen eines Vermehrungsfruchtsensors (18) die Abgabemenge des Applikationsmittels und/oder die Abgabedauer für einen einzelnen Sprühvorgang variiert wird.

15. Verfahren nach Anspruch 14, **dadurch gekennzeichnet, dass** die Steuervorrichtung (14) zur Auswahl unterschiedlicher Betriebsmodi ausgebildet ist, die von einer Bedienperson auswählbar sind, und über die die Abgabemenge des Applikationsmittels und/oder die Abgabedauer für einen einzelnen Sprühvorgang vorgegeben wird.

16. Verfahren nach einem der vorherigen Ansprüche 9 bis 15, **dadurch gekennzeichnet, dass** die Steuervorrichtung (14) die Applikationsvorrichtung bei Vorliegen bestimmter äußerer Parameter zu einer kontinuierlichen Abgabe des Applikationsmittels umschaltet.
